# NEUE EUROPÄISCHE PATENTSCHRIFT

(11) **EP 3 106 445 B2**
(45) Veröffentlichungstag und Bekanntmachung des Hinweises auf die Entscheidung über den Einspruch: **16.06.2021**
(45) Hinweis auf die Patenterteilung: 05.09.2018
(21) Anmeldenummer: 15001774.7
(22) Anmeldetag: 16.06.2015
(51) Int. Cl.: C04B 28/02, C04B 28/18, C04B 7/345

(54) **VERFAHREN ZUR HERSTELLUNG VON HOCH-REAKTIVEN ZEMENTEN**
METHOD FOR THE PREPARATION OF HIGHLY REACTIVE CEMENTS
PROCÉDÉ DE FABRICATION DE CIMENTS HAUTEMENT RÉACTIFS

(43) Veröffentlichungstag der Anmeldung: 21.12.2016
(73) Patentinhaber: HeidelbergCement AG, 69120 Heidelberg (DE)
(72) Erfinder: Ben Haha, Mohsen, 69117 Heidelberg (DE); Link, Tim, 44532 Lünen (DE); Ludwig, Horst-Michael, 99423 Weimar (DE); Bellmann, Frank, 99425 Weimar (DE)
(74) Vertreter: Zellentin & Partner mbB Patentanwälte

(56) Entgegenhaltungen:
- EP-A1- 2 676 943
- EP-A1- 2 801 557
- EP-A1- 2 801 558
- WO-A2-2007/017142
- DE-B4-102005 037 771
- DE-B4-102009 018 632
- T. LINK ET AL: "Reactivity and phase composition of Ca2SiO4 binders made by annealing of alpha-dicalcium silicate hydrate", CEMENT AND CONCRETE RESEARCH., Bd. 67, 1. Januar 2015 (2015-01-01), Seiten 131-137, XP055230064, US ISSN: 0008-8846, DOI: 10.1016/j.cemconres.2014.08.009
- TORAYA, H. & YAMAZAKI, S.: "Simulated annealing structure solution of a new phase of dicalcium silicate Ca2SiO4 and the mechanism of structural changes from alphadicalcium silicate to alpha-L'-dicalcium silicate via the new phase", ACTA CRYSTALLOGRAPHICA SECTION B, Bd. 58, Nr. 4, 31. August 2002 (2002-08-31), Seiten 613-621, XP002751280, Oxford ISSN: 0108-7681
- GARBEV K ET AL: "First Observation of alpha-Ca2[SiO3(OH)]-Ca6[Si2O7][SiO4](OH)2 Phase Transformation upon Thermal Treatment in Air", JOURNAL OF THE AMERICAN CERAMIC SOCIETY, BLACKWELL PUBLISHING, MALDEN, MA, US, Bd. 91, Nr. 1, 1. Januar 2008 (2008-01-01) , Seiten 263-271, XP002585877, ISSN: 0002-7820, DOI: 10.1111/J.1551-2916.2007.02115
- HIDEKI ISHIDA, ET AL.: "alpha-Dicalcium Silicate Hydrate: Preparation,Decomposed Phase, and Its Hydration", JOUR. AMERICAN CERAMIC SOCIETY, Bd. 76, Nr. 7, 31. Juli 1993 (1993-07-31), Seiten 1707-1712, XP002751281, DOI: 10.1111/j.1151-2916.1993.tb06638.x
- FRED VON LAMPE ET AL: "Über eine neue Form von ss-Belit", SILIKAT TECHNIK,, Bd. 39, Nr. 4, 1. Januar 1988 (1988-01-01) , Seiten 117-118, XP001278767,
- H. ISHIDA et al.: "alpha-Dicalcium Silicate Hydrate: Preparation, Decomposed Phase, and Its Hydration", J. Am. Ceram. Soc., vol. 76, no. 7, 1993, pages 1707-1712,
- M. TROJOSKY: "Trommel oder Fliessbett? Auswahlkriterien fur die Verwendung von Trocknern in der Prozessindustrie", Verfahrenstechnik, September 2008 (2008-09),
- Anonymous: "Blaine (Zement)", Wikipedia, 9 September 2009 (2009-09-09), Retrieved from the Internet: URL:https://de.wikipedia.org/w/index.php?t itle=Blaine_(Zement)&oldid=64329510 [retrieved on 2019-05-20]
- Anonymous: "Zement", Wikipedia, 8 June 2015 (2015-06-08), Retrieved from the Internet: URL:https://de.wikipedia.org/w/index.php?t itle=Zement&oldid=142911692 [retrieved on 2019-05-20]
- Anonymous: "Zementarten", , 30 April 2015 (2015-04-30), Retrieved from the Internet: URL:https://www.beton.wiki/index.php?title =Zementarten&oldid=5575 [retrieved on 2019-05-21]
- Anonymous: "Betonzusatzmittel", Wikipedia, 11 July 2014 (2014-07-11), Retrieved from the Internet: URL:https://de.wikipedia.org/w/index.php?t itle=Betonzusatzmittel&oldid=132050369 [retrieved on 2019-05-21]
- Anonymous: "Drehofen", Wikipedia. Beton-Wiki, 1 June 2015 (2015-06-01),

## Beschreibung

Die vorliegende Erfindung betrifft ein Verfahren zur Herstellung von hoch-reaktiven Zementen durch hydrothermale Behandlung und Temperung von Ausgangsmaterialien.

Zemente, welche durch hydrothermale Behandlung und anschließendes Tempern erhältlich sind, sind an sich bekannt. So beschreibt die EP 2 676 943 A1 ein Verfahren zur Herstellung von Belitzement mit hoher Reaktivität, bei dem ein Ausgangsmaterial aus Rohstoffen bereitgestellt wird, welche ein molares Ca/Si-Verhältnis von 1,5 bis 2,5 aufweisen, das Ausgangsmaterial im Autoklaven bei einer Temperatur von 100 bis 300 °C und einer Verweilzeit von 0,1 bis 24 h hydrothermal behandelt wird, wobei das Wasser/Feststoff-Verhältnis von 0,1 bis 100 beträgt, das dabei erhaltene Zwischenprodukt bei 350 bis 495 °C getempert wird, wobei die Aufheizrate von 10 - 6000 °C/min und die Verweilzeit von 0,01 - 600 min beträgt, und wobei während des Mischens und/oder in den folgenden Schritten 0,1 bis 30 Gew.-% zusätzliche Elemente und/oder Oxide zugegeben werden. Weitere Verfahren finden sich in den in diesem Dokument erwähnten Dokumenten zum Stand der Technik.

Solche Zemente haben den Vorteil, bei der Herstellung wesentlich weniger Kohlendioxid freizusetzen als Portlandzement, Tonerdezement und andere klassische Zemente. Als Rohmaterial eignen sich sehr viele Neben- und Abfallprodukte. Diese Zemente sind daher ökologisch vorteilhaft.

Sofern man bei Verfahren wie oben beschrieben die Temperung bei Temperaturen von z.B. unter 500 °C durchführt, ergibt sich ein besonders großer energetischer Vorteil, außerdem sind viele der Komponenten im Zement reaktiver als wenn höhere Temperaturen zur Temperung eingesetzt werden. Nachteilig ist, dass unter bestimmten Randbedingungen nur geringe Reaktivitäten erreicht werden können. Diese Randbedingungen sind 1. eine bestimmte Kornform und Oberflächencharakteristik des durch die hydrothermale Beandlung erhaltenen Zwischenproduktes, 2. eine Temperung von sehr großen Zwischenprodukt-Mengen und 3. eine Temperung in geschlossenen Behältern.

Gemäß EP 2 243 754 A1 soll mittels hydrothermaler Benandlung von Ca- und Si-haltigen Ausgangsmaterialien und Reaktivmahlung des Produkts ein besonders reaktives Produkt erhalten werden. Eine Mahlung, durch die eine Aktivierung im Sinne einer chemischen Umwandlung erreicht werden soll, erfordert aber viel Energie. Zudem geht mit einer ausreichenden Reaktion auch eine sehr hohe Feinheit des Produkts einher, solchermaßen hergestellter Zement hat einen hohen Wasseranspruch bzw. ergibt ohne Fließmittel keine brauchbare Festigkeit.

Die Aufgabe der Herstellung hoch-reaktiver Zemente bei möglichst geringem Energiebedarf ist also noch nicht vollständig gelöst.

Überraschend wurde nun gefunden, dass sich die Reaktivität des Belit in Zementen, welche durch hydrothermale Behandlung von Ausgangsmaterial und Temperung erhalten werden, steigern lässt, indem man das bei der Temperung abgespaltene Wasser schnell abführt. Eine schnelle Abführung des Wasserdampfes wird zum einen durch eine Mahlung des durch die hydrothermale Behandlung erhaltenen Zwischenprodukts erreicht. Die Änderung der Korncharakteristik verbessert den Gasstrom des ausgetriebenen Wassers. Zum anderen erreicht man eine schnelle Abführung, indem man die Temperung unter einem kontinuierlichen Gasstrom durchführt oder beim Tempern ein hohes Oberfläche zu Volumen-Verhältnis des Zwischenproduktes einstellt.

Die Erfindung löst daher die obige Aufgabe durch ein Verfahren zur Herstellung von Zementen durch hydrothermale Behandlung eines Ausgangsmaterials, welches Quellen für CaO und SiO₂ enthält, in einem Autoklaven bei einer Temperatur von 100 bis 300 °C, und Tempern des erhaltenen Zwischenproduktes bei 400 bis 495 °C, wobei während dem Tempern gebildetes Wasser abgeführt wird, indem das Tempern unter einem kontinuierlichen Gasstrom in einem Flashcalcinator, in einem Zyklonvorwärmer oder im Wirbelschichtverfahren erfolgt.

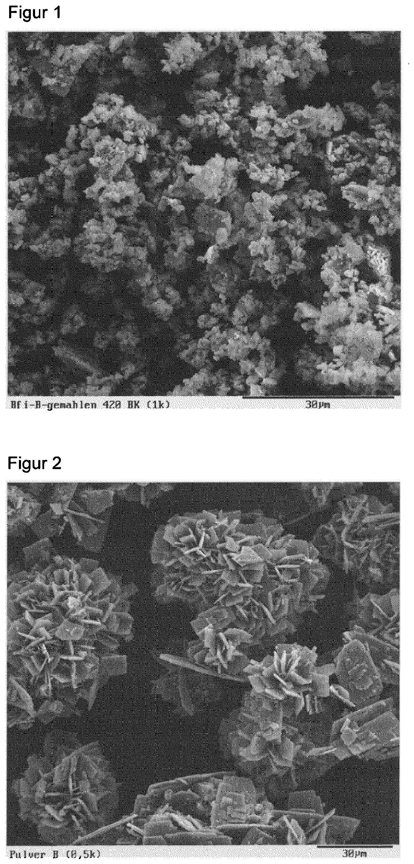

Das nach dem Tempern erhaltene Endrodukt zeigt, falls notwendig auf übliche Zementfeinheiten gemahlen, eine sehr hohe Reaktivität. Rasterelektronenmikroskopische Untersuchungen zeigen, dass die Mahlung des Zwischenproduktes nicht nur die Partikelgröße beeinflusst, sondern auch die Oberflächenstruktur. In Figur 1 ist das so erhaltene Endprodukt gezeigt, in Figur 2 ein ohne Abführung des Wassers durch Mahlung oder Gastrom bei der Temperung erhaltenes Produkt. Bei dem mit Mahlung erhaltenen Produkt sind die Partikel kleiner und die Packungsdichte ist höher. Die Reaktivität dieses Produkts ist wesentlich höher, es ergibt sich eine bessere Verarbeitbarkeit. Aber auch die Phasenzusammensetzung wird durch die schnelle Abführung des Wasserdampfes beeinflusst, der Gehalt an γ C₂S sinkt, dafür bildet sich mehr x C₂S. Die Reaktivität und teilweise auch der Anteil der röntgenamorphen Phasen steigt.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet sowie ein auf anderem Wege erhaltenes, gleich feinkörniges Material, welches nach dem Mischen mit Wasser hydraulisch reagiert. Bindemittel oder Bindemittelmischung bezeichnet ein hydraulisch erhärtendes Gemisch, welches Zement und typischerweise aber nicht zwingend weitere, fein gemahlene Komponenten enthält, und welches nach Zusatz von Wasser, ggfs. Zusatzmitteln und Gesteinskörnung, zur Anwendung gelangt. Soweit nichts anderes angegeben ist, ist mit "reaktiv" eine hydraulische Reaktivität gemeint.

Der Zement wird durch hydrothermale Behandlung eines Ausgangsmaterials aus einem oder mehreren Rohstoffen, welche ausreichende Mengen CaO und SiO₂ bereitstellen, hergestellt. Dabei eignen sich einerseits reine bzw. im Wesentlichen reine Rohstoffe wie Calciumhydroxid oder -oxid und Quarzmehl oder Microsilica. Andererseits kann eine Vielzahl natürliche aber auch industrielle Materialien, wie zum Beispiel, aber nicht ausschließlich, Kalkstein, Bauxit, Ton / Tonstein, kalzinierte Tone (z.B. Metakaolin), Basalte, Periodite, Dunite, Ignimbrite, Karbonatite, Aschen / Schlacken / Hüttensande hoher und geringer Qualität (in Bezug auf Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Ausgangsmaterial verwendet werden. Es fallen ebenfalls namentlich nicht genannte Stoffe / Stoffgruppen in den Schutzbereich, welche die chemischen Mindestanforderungen als potentielle Rohstoffe erfüllen.

Besonders bevorzugt sind Rohstoffe, die zugleich SiO₂ und CaO enthalten, so dass das gewünschte Verhältnis Ca/Si bereits vorliegt. Ist das gewünschte Ca/Si-Verhältnis nicht vorhanden, so müssen die Rohstoffe vor der weiteren Behandlung bezüglich der chemischen Zusammensetzung durch Zugabe weiterer Reaktionspartner wie Ca- oder Si-haltiger Feststoffe auf ein geeignetes Ca:Si-Verhältniss im Ausgangsmaterial, das in der Regel von 1,5 bis 2,5 beträgt, eingestellt werden. Hierfür eignen sich beispielsweise Portlandit Ca(OH)₂ oder gebrannter oder ungebrannter Kalk. In der Regel werden die Rohstoffe bzw. das Ausgangsmaterial bezüglich Korngrösse und Korngrössenverteilung durch mechanische oder thermische Behandlung optimiert, wobei die thermische Behandlung auch zu einer Optimierung der chemischen Zusammensetzung führen kann.

Die bevorzugten sekundären Rohstoffe bringen zusätzlich zu Quellen für CaO und SiO₂ auch weitere Elemente wie Aluminium, Eisen, Magnesium und andere in die Ausgangsmaterialmischung ein. Diese werden als Fremdionen in die Phasen eingebaut oder bilden eigene Phasen aus. Sofern sie vorhanden sind, wird ein molares (Ca+Mg)/(Si+Al+Fe)-Verhältnis von 1 bis 3.5, ein molares Verhältnis Ca:Mg von 0,1 bis 100 und ein molares Verhältnis (Al+Fe)/Si von 100 bis 0,1 bevorzugt. Das molare Verhältnis der Summe von Calcium und Magnesium zur Summe von Silizium, Aluminium und Eisen soll vorzugsweise von 1,5 bis 2,5, besonders bevorzugt etwa 2, betragen. Das Verhältnis von Calcium zu Magnesium beträgt vorzugsweise von 0,2 bis 20, besonders bevorzugt von 0,5 bis 5. Das Verhältnis der Summe von Aluminium und Eisen zu Silizium beträgt für einen hohen Aluminiumgehalt bevorzugt von 100 bis 10, für einen mittleren Aluminiumgehalt von 1 bis 20 und für einen niedrigen Aluminiumgehalt von 0,01 bis 2. Bei der Ermittlung dieser Verhältnisse werden diejenigen Verbindungen nicht berücksichtigt, die sich bei dem Herstellungsverfahren inert verhalten.

In einer bevorzugten Ausgestaltung wird Feinkornmaterial als Ausgangsmaterial gewählt, dessen Größtkorn vorzugsweise höchstens 0,1 mm beträgt. Hierfür kommen insbesondere die feineren Kornfraktionen aus der Wiederaufbereitung von zementhaltigen Bindemitteln in Baustoffen wie Altbetonen und Altzementen zum Einsatz. Ein feineres Ausgangsmaterial ist sowohl im Hinblick auf die Umsetzungsgeschwindigkeit vorteilhaft, als auch hinsichtlich des Aufwandes für die Mahlung zum fertigen Zement.

Das Ausgangsmaterial bzw. die Rohstoffe kann/können in einem zusätzlichen Schritt gebrannt werden. Dieser Schritt ist besonders bevorzugt bei der Verwendung von industriellen Nebenprodukten oder relativ wenig reaktiven bzw. groben Materialien als Rohstoffe. Dabei sind Temperaturen von 400 bis 1400 °C, vorzugsweise von 750 bis 1100 °C, geeignet. Die Brenndauer beträgt von 0,01 bis 6 Stunden, bevorzugt etwa 1 Stunde. Im Flashcalciner sind 0,01 bis 0,02 h ausreichend und bevorzugt. Durch das Brennen des Ausgangsmaterials/der Rohstoffe ergibt sich der Vorteil, dass Stoffe gezielt nutzbar gemacht werden, welche ansonsten kaum oder nicht verwendet werden können (z.B. kristalline Aschen, Tone und Schlacken usw.) indem eine verbesserte/größere Umsetzbarkeit im Autoklaven zum Zwischenprodukt α-C₂SH ermöglicht wird (durch Entsäuerung und oder Entwässerung...). Des Weiteren bietet sich der Vorteil, dass gezielt Precursor-Phasen (z.B. reaktionsträger Belit) erzeugt werden können, welche nach dem hydrothermalen Behandeln und Tempern Produkte mit besonders hohen Gehalten an x-C₂S, α-C₂S und/oder mindestens einer reaktiven, röntgenamorphen Phase aufweisen. Der Vorteil der Verwendung von Belit als Rohmaterial für den Autoklavprozess ist eine verbesserte Phasenzusammensetzung des finalen Produkts gegenüber ungebrannten Rohstoffen.

Es ist vorteilhaft dem Ausgangsmaterial, z.B. während des Mischens der Rohstoffe, oder in einem der anschließenden Prozessschritte, zusätzliche Elemente oder Oxide in einer Menge von 0,1 bis 30 Gew.-% zuzufügen. Natrium, Kalium, Bor, Schwefel, Phosphor oder deren Kombination sind als diese zusätzlichen Elemente/Oxide, die auch zusammenfassend als Fremdoxide bezeichnet werden, bevorzugt. Hierfür eignen sich Alkali- und/oder Erdalkali-Salze und/oder Hydroxide, beispielweise CaSO₄ • H₂O, CaSO₄ •½ H₂O, CaSO₄, CaHPO₂ • 2H₂O, Ca₃P₂O₈, NaOH, KOH, Na₂CO₃, NaHCO₃, K₂CO₃, MgCO₃, MgSO₄, Na₂Al₂O₄, Na₃PO₄, K₃PO₄, Na₂[B₄O₅(OH)₄] • 8 H₂O usw. In einer bevorzugten Ausführungsform weist das Ausgangsmaterial ein molares Verhältnis P/Si von etwa 0,05 und/oder S/Si von etwa 0,05 und/oder Ca/K von etwa 0,05 auf.

Das, ggfs. wie beschrieben vorbehandelte, Ausgangsmaterial kann vorteilhaft mit Kristallisationskeimen, die beispielsweise Calciumsilikathydrate, Portlandklinker, Hüttensand, Magnesiumsilikate, Calciumsulfataluminat(belit)-zement, Wasserglas, Glaspulver etc. enthalten, versetzt, also geimpft werden. Dadurch kann die Reaktion beschleunigt werden. Als Kristallisationskeime sind verschiedene Calciumsilikathydrat enthaltende Verbindungen geeignet, insbesondere α-2CaO·SiO₂·• H₂O, Afwillit, Calciochondrodit und β-Ca₂SiO₄. Die Menge beträgt bevorzugt von 0,01 - 30 Gew.-%

Das Ausgangsmaterial, welches ggf. wie oben beschrieben vorbehandelt und/oder geimpft ist, wird anschließend einer hydrothermalen Behandlung im Autoklaven bei einer Temperatur von 100 bis 300 °C, bevorzugt von 150 °C bis 250 °C unterzogen. Hierbei wird bevorzugt ein Wasser/Feststoff-Verhältnis von 0,1 bis 100, bevorzugt von 2 bis 20 gewählt. Die Verweilzeiten betragen typischerweise von 0,1 bis 24 Stunden, bevorzugt von 1 bis 16 Stunden, insbesondere von 2 bis 8 Stunden. Der Druck während der hydrothermalen Behandlung hängt vor allem von der Temperatur ab und entspricht üblicherweise dem Dampfdruck von Wasser bei der gewählten Temperatur. Durch die hydrothermale Behandlung wird das Ausgangsmaterial in ein mindestens ein Calciumsilikathydrat und ggf. weitere Verbindungen enthaltendes Zwischenprodukt umgewandelt.

Überraschend zeigten Laborversuche, dass eine Wasserdampfathmosphäre während der Temperung die Reaktivität und den Phasenbestand des Endprodukts Zement beeinflusst. Bei größeren Probenmengen im Ofen oder bei Verwendung geschlossener Probenbehälter steigt der Wasserdampfpartialdruck stark an. Die Reaktivität des erhaltenen Zements sinkt und der Anteil an x-C₂S wird gemindert. Erfindungsgemäß wird daher während der Temperung ein niedriger Wasserdampfpartialdruck eingestellt. Dies wird durch Abführen von Wassserdampfs während des Temperns oder besonders bevorzugt durch die Kombination davon mit einem Mahlen des Zwischenprodukts erreicht.

Das Zwischenprodukt wird daher erfindungsgemäß vorzugsweise gemahlen. Der Mahlprozess kann sowohl am nassen als auch am getrockneten Zwischenprodukt erfolgen. Es wurde überraschend gefunden, dass eine Mahlung des Zwischenprodukts zu signifikant reaktiveren Endprodukten führt. Es findet jedoch kein Reaktionsmahlen statt, d.h. die zugeführte Mahlenergie wird so begrenzt, dass im wesentlichen keine chemischen oder mineralogischen Umwandlungen ausgelöst werden. Ziel der Mahlung ist eine Deagglomeration und eine Verbesserung des Kornbandes. Es wird angenommen, dass dadurch während der Temperung das abgespaltene Wasser schneller entweichen kann.

Die Mahlung kann beispielsweise in einer Scheibenschwingmühle, Planetenmühle, Kugelmühle, Walzenmühle, Gutbett-Walzenmühle oder Wälzmühle erfolgen. Die Dauer beträgt vorzugsweise von 0,1 bis 30 Minuten, insbesondere von 0,5 bis 10 Minuten und ganz besonders bevorzugt von 1 bis 5 Minuten. Die Partikelgrößenverteilung sollte nach der Mahlung möglichst breit sein um eine gute Packungsdichte zu gewährleisten.

Das vorzugsweise gemahlene Zwischenprodukt wird bei einer Temperatur von 350 °C bis 700°C, vorzugsweise bei Temperaturen zwischen 400 °C und 500 °C, getempert. Höhere Temperaturen beim Tempern, wie 500 - 700 °C, sind möglich, verringern aber den energetischen Vorteil und die Reaktivität von Phasen wie beispielsweise x-C₂S und den Anteil der röntgenamorphen Phase, daher sind sie weniger bevorzugt. Ebenso sind Temperaturen von 400 °C und darunter weniger bevorzugt, da die Umsetzung länger dauert oder bei besonders reaktionsträgen Anteilen des Zwischenproduktes gar nicht erfolgt.

Die Aufheizrate beträgt von 10 - 6000 °C/min, bevorzugt von 20 - 100 °C/min und besonders bevorzugt etwa 40 °C/min. Eine Verweilzeit von 0,01 - 600 min, bevorzugt von 1 - 120 min und besonders bevorzugt von 5 - 60 min ist geeignet. Zur weiteren Senkung des Anteils an reaktionsträgerem γ-C₂S bewährt sich auch eine zusätzliche Haltezeit von 1 - 120 min, bevorzugt von 10 - 60 min, während des Aufheizens bei einer Temperatur im Bereich von 400 - 440 °C.

Während des Temperns wird für eine schnelle Abführung des Wasserdampfes gesorgt. Eine schnelle Abführung des abgespaltenen Wassers bei der Temperung wird erfindungsgemäß durch einen Gasstrom erreicht. Im einfachsten Fall lässt man einen Luftstrom über das Material streichen. Auch ein ausreichend großes Oberfläche/Volumenverhältnis des Zwischenproduktes bei der Temperung zusammen mit einem offenen Behälter kann für eine ausreichend schnelle Abführung sorgen. Dies ist aber großtechnisch nur schwer realisierbar, daher wird erfindungsgemäß ein Gas- und insbesondere ein Luftstrom zur Abführung des Wassers verwendet.

Die Temperung erfolgt erfindungsgemäß in einem Flashcalcinator oder Zyklonvorwärmer oder im Wirbelschichtverfahren. Da angenommen wird, dass die CO₂ Gehalte des heißen Gasstromes einen geringen Einfluss auf die Bindemittelqualität haben, ist sowohl eine direkte als auch eine indirekte Befeuerung möglich.

Nach dem Abkühlen erhält man ein Endprodukt, welches das gewünschte, reaktive Belit enthält.

Neben dem im Portlandzement überwiegenden β C₂S sind Polymorphe bekannt, die eine höhere Reaktivität aufweisen, beispielsweise a, a'H, a'L und x C₂S, oder eine geringere Reaktivität wie z.B. γ-C₂S. Welcher Polymorph gebildet wird hängt unter anderem von der Temperatur ab. Durch das erfindungsgemäße Verfahren werden bei gleichen Ausgangsmaterialien im Vergleich zu den bisher bekannten hydrothermalen Herstellverfahren die reaktiven Polymorphe vermehrt gebildet und die Bildung von γ-C₂S wird vermindert. Das Endprodukt enthält 20 - 100 % der folgenden Verbindungen: x-Ca₂SiO₄, röntgenamorphe Verbindungen variabler Zusammensetzung, und β-Ca₂SiO₄, wobei der Gehalt an γ-Ca₂SiO₄ gering ist, typischerweise liegt er unter 20 Gew.-%, meist unter 15 Gew.-% und häufig unter 10 Gew.-%. Das Endprodukt enthält vorzugsweise x-Ca₂SiO₄ in einem Gehalt von > 30 Gew.-% und mindestens eine röntgenamorphe Phase mit einem Gehalt > 5 Gew.-%, wobei sich alle Anteile des Endprodukts auf 100 % summieren.

Je nach gewünschter Zementfeinheit, Feinheit des Ausgangsmaterial und insbesondere der beim Mahlen des Zwischenprodukts erreichten Feinheit erfolgt noch eine Mahlung des Endprodukts zum endgültigen Zement, d.h. auf eine gewünschte Feinheit bzw. Kornverteilung. Beim Mahlen können in an sich bekannter Weise Mahlhilfsmittel zugefügt werden, beispielsweise Alkanolamine, Ethylenglycole oder Propylenglycole. Diese werden in den üblichen Dosierungen, beispielweise von 0,01 - 0,05 Gew.-%, verwendet.

Die BET-Oberfläche des Endprodukts soll von 1 bis 30 m²/g betragen. Die SiO₂-Tetraeder im Endprodukt weisen einen mittleren Kondensationsgrad von weniger als 1,0 auf. Der Wassergehalt im Bindemittel beträgt weniger als 3,0 Gew.-%.

Der erhaltene Zement eignet sich als Ersatz von Portlandzement und anderen klassischen Zementen in hydraulischen Bindemitteln.

Im Bindemittel können auch Klinkerersatzmaterialien zugemischt werden. Die Mengenanteile sind sehr variabel, vorzugsweise werden 5 bis 95 Gew.-% Klinkerersatzmaterial und 5 bis 95 Gew.-% Zement eingesetzt. Bevorzugt sind 30 bis 85 Gew.-% Klinkerersatzmaterial und 15 bis 70 Gew.-% Zement, besonders bevorzugt 40 bis 80 Gew.-% Klinkerersatzmaterial und 20 bis 60 Gew.-% Zement, wobei die Werte auf die gesamte Menge an Bindemittel bezogen sind und sich die Anteile mit allen weiteren Bindemittelkomponenten zu 100% addieren.

Bevorzugte Klinkerersatzmaterialien sind Puzzolane und latent hydraulische Materialien, insbesondere getemperte Tone (z.B. Metakaolin) und Schiefer, V und W Flugaschen, insbesondere solche mit hohem Glasanteil und/oder Gehalt an reaktiven Phasen, Hüttensande sowie künstliche (puzzolanische und latent hydraulische) Gläser.

Bevorzugt enthält das Bindemittel außerdem Zusatzmittel und/oder Zusatzstoffe sowie ggfs. weitere hydraulisch aktive Komponenten und/oder Sulfatträger.

Bei den Zusatzstoffen handelt es sich um hydraulisch nicht aktive Komponenten, wie zum Beispiel, aber nicht ausschließlich, gemahlener Kalkstein / Dolomit, gefälltes CaCO₃, Mg(OH)₂, Ca(OH)₂, CaO, Silica Fume und Glasmehl. Die Zusatzstoffe können in Summe in einer Menge im Bereich von 1 bis 25 Gew.-%, vorzugsweise von 3 bis 20 Gew.-% und noch stärker bevorzugt von 6 bis 15 Gew.-% dosiert werden.

In einer bevorzugten Ausführungsform sind Füller, insbesondere Gesteinsmehle wie Kalksteinmehl, als zusätzliche Hauptbestandteile enthalten. Die Menge ist dabei sehr variabel, vorzugsweise werden 5 bis 95 Gew.-% Füller und 5 bis 95 Gew.-% Zement eingesetzt. Bevorzugt sind 30 bis 85 Gew.-% Füller und 15 bis 70 Gew.-% Zement, besonders bevorzugt 40 bis 80 Gew.-% Füller und 20 bis 60 Gew.-% Zement, wobei die Werte auf die gesamte Menge an Bindemittel bezogen sind und sich die Anteile mit allen weiteren Bindemittelkomponenten zu 100% addieren.

Als Sulfat eignen sich besonders Alkali- und / oder Erdalkalisulfate, vorzugsweise in Form von Gips und / oder Halbhydrat und / oder Anhydrit und / oder Magnesiumsulfat und / oder Natriumsulfat und / oder Kaliumsulfat.

In einer bevorzugten Ausführungsform enthält das Bindemittel mindestens ein zusätzliches hydraulisches Material, vorzugsweise Portlandzement. Dabei kann der Portlandzement sowohl analog zu den Portlandhüttenzementen mengenmäßig überwiegen, als auch analog zu den Hochofen- und Kompositzementen vergleichbare Mengen Portlandklinker und Gemisch von latent-hydraulischem Material mit Anreger bis hin zu überwiegend Gemisch von latent-hydraulischem Material mit Anreger enthalten. Vorzugsweise kann das Bindemittel von 1 bis 70 Gew.-%, insbesondere von 5 bis 40 Gew.-% und besonders bevorzugt von 10 bis 25 Gew.-%, Portlandzement enthalten.

Der Zement, sowie ggfs. vorhandene Zusätze, wie zum Beispiel Klinkerersatzmaterial, Kalkstein und/oder Portlandzementklinker und/oder andere Klinker und/oder Sulfatträger, sind in dem Bindemittel auf eine Feinheit (nach Blaine) von 2000 bis 20000 cm²/g, vorzugsweise von 3000 bis 6000 cm²/g und besonders bevorzugt von 4000 bis 5000 cm²/g gemahlen. Die Mahlung kann in an sich bekannter Weise getrennt oder gemeinsam erfolgen.

Vorzugsweise enthält der Zement bzw. die Bindemittelmischung außerdem Zusatzmittel, vorzugsweise einen oder mehrere Abbinde- und / oder Erhärtungsbeschleuniger und/oder Betonverflüssiger und / oder Fließmittel und / oder Verzögerer. Betonverflüssiger und / oder Fließmittel und / oder Verzögerer sind vorzugsweise solche auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und Borate, Oxalate, Sulfanilsäure, Aminocarbonsäuren, Salicylsäure und Acetylsalicylsäure, sowie von Dialdehyden. Weiterhin können Luftporenbildner, Hydrophobiermittel, Dichtungsmittel, und/oder Stabilisierer enthalten sein. Die Dosierung der Zusatzmittel erfolgt in der üblichen Menge.

Das Bindemittel kann in an sich bekannter Weise für alle Anwendungen, in denen ansonsten Portlandzement, Portlandhüttenzement, Kompositzement usw. verwendet werden, zum Einsatz kommen. In der Regel wird das Bindemittel zum Einsatz mit Gesteinskörnungen und ggfs. weiteren Zusätzen z.B. zu Beton, Mörtel, Putz, Estrich etc. vermischt und mit Wasser angemacht.

Bei der Verarbeitung des Bindemittels ist ein Wasser / Bindemittelwert von 0,2 bis 2 geeignet, bevorzugt von 0,3 bis 0,8 und besonders bevorzugt von 0,35 bis 0,5.

Die folgenden Beispiele sind Vergleichsbeispiele. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1 (Vergleich)

Es wurde eine Ausgangsmaterialmischung aus Ca(OH)₂ und hochdispersem SiO₂ im molaren Verhältnis 2:1 hergestellt. Die Mischung wurde nach Zugabe von 5 Gew.-% α-2 CaO•SiO₂•H₂O als Impfkeime mit Wasser homogenisiert. Das Verhältnis Wasser/ Feststoff betrug 10. Es folgte eine Autoklavbehandlung bei 200 °C für 16 h. Anschließend erfolgte eine Trocknung bei 60°C. Das Zwischenprodukt setzte sich aus 92 Gew.-% α-2CaO·SiO₂·H₂O, 2 Gew.-% Kalzit, und 6 Gew.-% amorphen Bestandteilen zusammen.

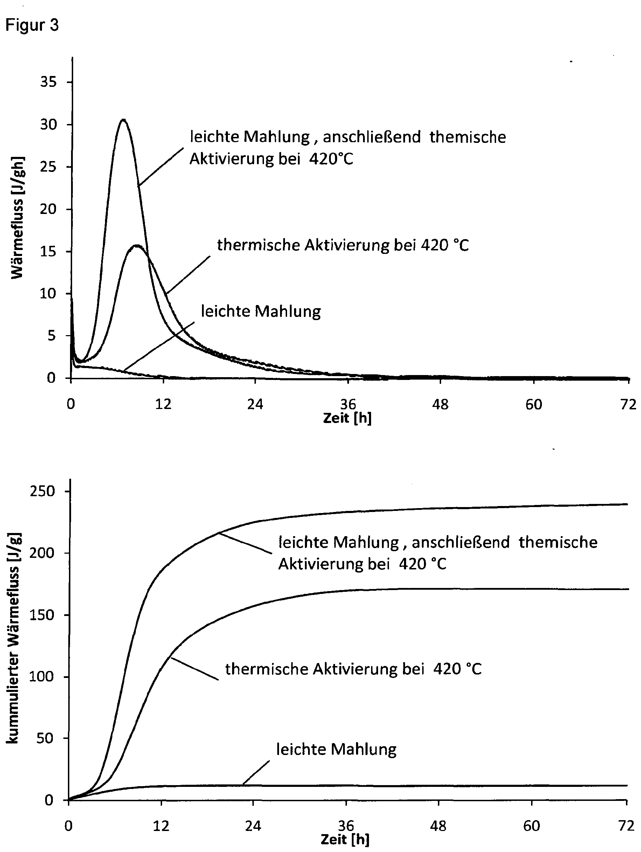

Das trockene Zwischenprodukt wurde zur verbesserten Abführung von Wasser beim nachfolgenden Tempern 1 min. in einer Scheibenschwingmühle gemahlen. Röntgenographisch wurde keine Veränderung des Phasenbestandes des Zwischenproduktes durch die Mahlung festgestellt. Die hydraulische Aktivität des gemahlenen Zwischenproduktes wurde mittels Wärmeflusskalorimetrie überprüft. Das Ergebnis ist in Figur 3 dargestellt. Nach anfänglicher geringer Wärmefreisetzung zeigt dieses Produkt keinerlei hydraulische Aktivität. Daher ist eine Aktivierung durch die Mahlung ausgeschlossen, es handelt sich nicht um eine Reaktivmahlung.

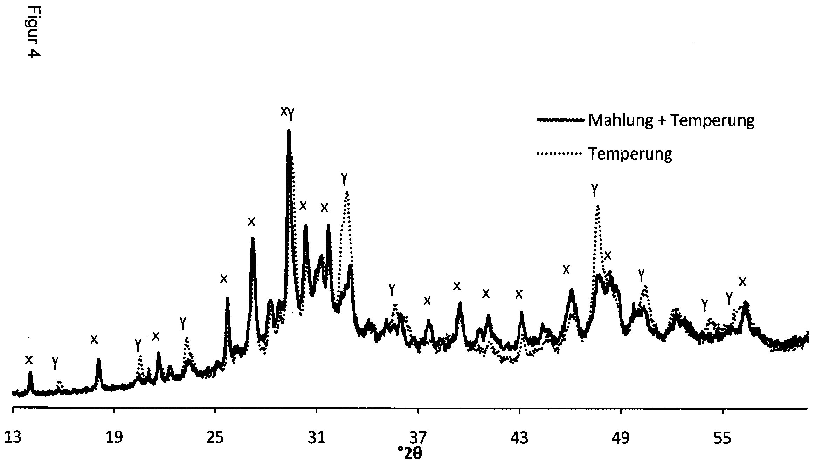

Das gemahlene Zwischenprodukt wurde dann durch Tempern bei 420°C in ein Endprodukt umgewandelt. Das Endprodukt bestand aus 30 Gew.-% x-Ca₂SiO₄, 3 Gew.-% γ-Ca₂SiO₄, 3 Gew.-% Calcit und 64% röntgenamorphen Material. Das zugehörige Röntgendiffraktogramm ist in Figur 4 dargestellt. Das Endprodukt wurde hinsichtlich der hydraulischen Reaktivität mittels Wärmeflusskalorimetrie untersucht. Die Ergebnisse sind auch in Figur 3 dargestellt. Es wurde eine hohe hydraulische Reaktivität nachgewiesen. Durch die leichte Mahlung wurde eine Steigerung der Wärmemenge von ca. 40 % nach 3 Tagen erreicht (im Vergleich zum Vergleichsbeispiel 2). Das Bindemittel ließ sich mit einem Wasser/Bindemittel-Verhältnis von 0,4 anrühren und verarbeiten.

### Vergleichsbeispiel 2

Das Zwischenprodukt aus Beispiel 1 wurde ohne Maßnahmen zur Abführung von Wasser wie eine Mahlung oder einen Gasstrom durch Tempern bei 420°C in ein nicht erfindungsgemäßes Endprodukt umgewandelt. Das Endprodukt bestand aus 47 Gew.-% röntgenamorphen Material, 30 Gew.-% x-Ca₂SiO₄, 20 Gew.-% γ-Ca₂SiO₄ und 3 Gew.-% Calcit. Das zugehörige Röntgendiffraktogramm ist in Figur 3 dargestellt. Das Endprodukt wurde hinsichtlich der hydraulischen Reaktivität mittels Wärmeflusskalorimetrie untersucht. Die Ergebnisse sind ebenfalls in Figur 4 dargestellt. Das Produkt zeigt eine deutlich geringere Wärmefreisetzung als das Produkt aus Beispiel 1. Um das Produkt zu einer Paste anzumischen war ein Wasser/Bindemittel-Verhältnis von 1,5 notwendig.

### Beispiel 3 (Vergleich)

Es wurde eine Ausgangsmaterialmischung aus Ca(OH)₂ und nano-SiO₂ im molaren Verhältnis 2:1 hergestellt. Die Mischung wurde nach Zugabe von 5 Gew.-% α-2 CaO•SiO₂•H₂O als Impfkeime mit Wasser homogenisiert. Das Verhältnis Wasser/ Feststoff betrug 2. Es folgte eine Autoklavbehandlung bei 200 °C für 16 h. Anschließend erfolgte eine Trocknung bei 60°C. Das Zwischenprodukt setzte sich aus 93 Gew.-% α-2CaO·SiO₂·H₂O, 1 Gew.-% Kalzit, und 6 Gew.-% amorphen Bestandteilen zusammen

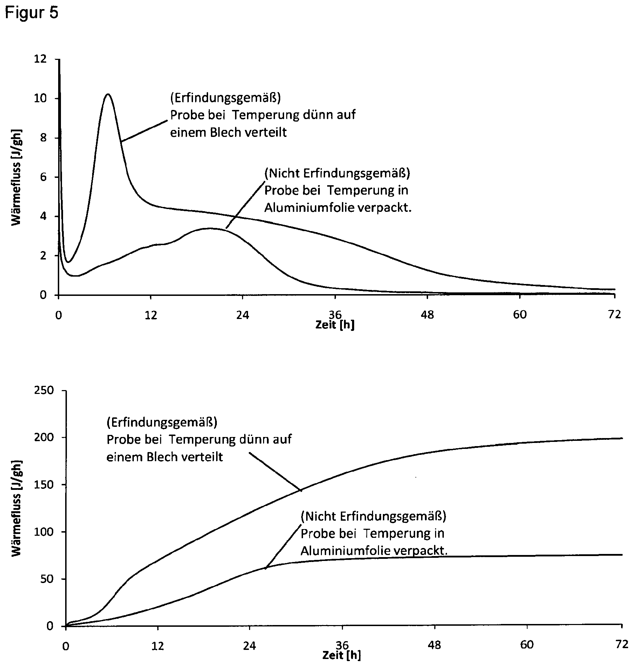

Das trockene Zwischenprodukt wurde zur verbesserten Abführung von Wasser beim Tempern mit einer Schichtdicke von ca. 1 mm, d.h. mit hohem Oberfläche/Volumen-Verhältnis, auf ein Stahlblech aufgestreut und im Muffelofen bei 420°C für 1 Stunde getempert. Anschließend erfolgt eine Erhöhung der Temperatur auf 495°C. Diese Temperatur wurde für 1 h gehalten. Der ausgetriebene Wasserdampf konnte so schnell entweichen und ein niedriger Wasserdampfpartialdruck wurde gewährleistet. Das Endprodukt bestand aus 17 Gew.-% röntgenamorphen Material, 63 Gew.-% x-Ca₂SiO₄, 8 Gew.-% γ-Ca₂SiO₄, 11 Gew.-% β-C₂S und 1 Gew.-% Calcit. Das Endprodukt wurde hinsichtlich der hydraulischen Reaktivität mittels Wärmeflusskalorimetrie untersucht. Die Ergebnisse sind in Figur 5 dargestellt.

### Vergleichsbeispiel 4

Das Zwischenprodukt aus Beispiel 3 wurde unter erhöhtem Wasserdampfpartialdruck in ein nicht erfindungsgemäßes Bindemittel überführt. Dazu wurde das Zwischenprodukt beim Tempern mit Aluminiumfolie umwickelt. Diese Folie verhindert ein schnelles Entweichen des Wasserdampfes während der Temperung. Die Temperung erfolgte ansonsten wie in Beispiel 3. Das nicht erfindungsgemäße Produkt bestand aus 17 Gew.-% röntgenamorphen Material, 22 Gew.-% x-Ca₂SiO₄, 60 Gew.-% γ-Ca₂SiO₄, und 1 Gew.-% Calcit. Das Endprodukt wurde hinsichtlich der hydraulischen Reaktivität mittels Wärmeflusskalorimetrie untersucht. Die Ergebnisse sind in Figur 5 dargestellt.

### Beispiel 5 (Vergleich)

Es wurde eine Ausgangsmaterialmischung aus Ca(OH)₂ und hochdispersem SiO₂ im molaren Verhältnis 2:1 hergestellt. Die Mischung wurde nach Zugabe von 5 Gew.-% α-2 CaO•SiO₂•H₂O als Impfkeime mit Wasser homogenisiert. Das Verhältnis Wasser/ Feststoff betrug 10. Es folgte eine Autoklavbehandlung unter ständigem Rühren bei 200 °C für 16 h. Anschließend erfolgte eine Trocknung bei 60°C. Das Zwischenprodukt setzte sich aus 87 Gew.-% α-2CaO·SiO₂·H₂O, 2 Gew.-% Kalzit, 2 Gew.-% Scawtit und 9 Gew.-% amorphen Bestandteilen zusammen.

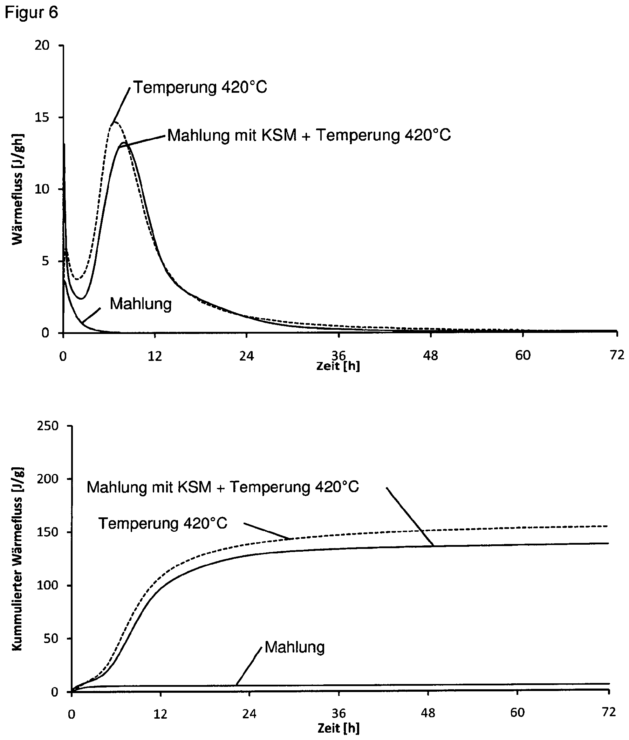

Das getrocknete Zwischenprodukt wurde mit 40 Gew.-% Kalksteinmehl (KSM) gemischt und zur Verbesserung der Abführung von Wasser beim Tempern für 3 min. in einer Planetenmühle gemahlen. Anschließend erfolgte eine Temperung bei 420°C. Das Ergebniss der Messung der Wärmeentwicklung mittels Wärmeflusskalorimetrie ist in Figur 6 dargestellt. Da Kalksteinmehl in diesem System als inert betrachtet werden kann, ist die Reaktivität des Endprodukts durch die gemeinsame Vermahlung mit Kalksteinmehl im Vergleich zum ungemahlenen Produkt (Vergleichsbeispiel 6) deutlich gesteigert. Das Endprodukt konnte mit einem Wasser/Bindemittel-Verhältnis von 0,4 zu einer Paste angemischt werden.

Das Endprodukt wurde hinsichtlich der Druckfestigkeitsentwicklung untersucht. Der Wasser/Bindemittelwert (w/b) wurde unter Verwendung von Fließmittel auf 0,3 eingestellt. Die Festigkeit wurde an Würfeln mit einer Kantenlänge von 4 cm geprüft. Es ergaben sich Festigkeiten von 46 N/mm² nach 2 Tagen, 46 N/mm² nach 7d und 49 N/mm² nach 28 Tagen.

### Vergleichsbeispiel 6

Das Zwischenprodukt aus Beispiel 5 wurde ohne Mahlung durch Tempern bei 420°C in ein nicht erfindungsgemäßes Endprodukt überführt. Dieses bestand aus 64 Gew.-% röntgenamorphen Material, 7 Gew.-% x-Ca₂SiO₄, 23 Gew.-% γ-Ca₂SiO₄ und 5 Gew.-% Calcit. Das Endprodukt wurde hinsichtlich der hydraulischen Reaktivität mittels Wärmeflusskalorimetrie untersucht. Die Ergebnisse sind in Figur 5 dargestellt. Das nicht erfindungsgemäße Endprodukt benötigt ein Wasser/Bindemittel-Verhältnis von 1,4 um eine pastöse Konsistenz zu erreichen.

## Patentansprüche

1. Verfahren zur Herstellung von Zement durch hydrothermale Behandlung eines Ausgangsmaterials, welches Quellen für CaO und SiO₂ enthält, in einem Autoklaven bei einer Temperatur von 100 bis 300 °C, und Tempern des erhaltenen Zwischenproduktes bei 400 bis 495 °C, **dadurch gekennzeichnet, dass**
während der Temperung gebildetes Wasser abgeführt wird, indem die Temperung zur Abführung des Wassers unter einem kontinuierlichen Gasstrom in einem Flashcalcinator, in einem Zyklonvorwärmer oder im Wirbelschichtverfahren erfolgt.

2. Verfahren gemäß Anspruch 1, **dadurch gekennzeichnet, dass** das Zwischenprodukt gemahlen wird, um während der Temperung gebildetes Wasser abzuführen.

3. Verfahren gemäß Anspruch 2, **dadurch gekennzeichnet, dass** die Mahldauer 0,1 bis 30 Minuten, vorzugsweise 0,5 bis 10 Minuten und insbesondere 1 bis 5 Minuten beträgt.

4. Verfahren gemäß einem der Ansprüche 1 bis 3, **dadurch gekennzeichnet, dass** die Mahlenergie so begrenzt wird, dass keine oder im wesentlichen keine chemischen und mineralogischen Umwandlungen erfolgen.

5. Verfahren gemäß einem der Ansprüche 1 bis 4, **dadurch gekennzeichnet, dass** für die hydrothermale Behandlung Impfkeime enthaltend Calciumsilikathydrat, Portlandklinker, Hüttensand, Magnesiumsilikate, Calciumsulfataluminat(belit)zement, Wasserglas, und/oder Glaspulver zugefügt werden, vorzugsweise in einer Menge von 0,01 bis 30 Gew.-%.

6. Verfahren gemäß einem der Ansprüche 1 bis 5, **dadurch gekennzeichnet, dass** beim Tempern während des Aufheizens eine Temperatur im Bereich von 400 bis 440°C für 1 bis 120 min gehalten wird.

7. Verfahren gemäß einem der Ansprüche 1 bis 6, **dadurch gekennzeichnet, dass** beim Tempern eine Aufheizrate von 1 bis 6000 °C/min und eine Verweilzeit von 0,01 bis 600 min eingestellt wird.

## Claims

1. Method for producing cement by means of hydrothermal treatment of a starting material, which contains sources for CaO and SiO₂, in an autoclave at a temperature of 100 to 300°C, and tempering the obtained intermediate product at 400 to 495°C, **characterised in that**
water formed during tempering is removed by the tempering taking place in a flash calciner, in a cyclone preheater or in the fluidised bed method under a continuous gas flow for removing the water.

2. Method according to claim 1, **characterised in that** the intermediate product is ground in order to remove water formed during tempering.

3. Method according to claim2, **characterised in that** the grinding duration is 0.1 to 30 minutes, preferably 0.5 to 10 minutes, and in particular 1 to 5 minutes.

4. Method according to one of claims 1 to 3, **characterised in that** the grinding energy is limited in such a way that no or substantially no chemical and mineralogical conversions take place.

5. Method according to one of claims 1 to4, **characterised in that** seed crystals containing calcium silicate hydrate, Portland clinker, ground granulated blast furnace slag, magnesium silicates, calcium sulphate aluminate (belite) cement, water glass, and/or glass powder are added for the hydrothermal treatment, preferably in an amount from 0.01 to 30% by weight.

6. Method according to one of claims 1 to 5, **characterised in that**, during tempering, during heating, a temperature ranging from 400 to 440°C is maintained for 1 to 120 min.

7. Method according to one of claims 1 to 6, **characterised in that**, during tempering, a heating rate of 1 to 6000°C/min and a residence time of 0.01 to 600 min are set.

## Revendications

1. Procédé de fabrication de ciment par traitement hydrothermique d'une matière première contenant des sources de CaO et de SiO₂, dans un autoclave à une température comprise entre 100 et 300°C, et recuisson entre 400 et 495°C du produit intermédiaire obtenu, **caractérisé en ce que**
de l'eau formée pendant la recuisson est éliminée grâce à une mise en œuvre de la recuisson dans un courant de gaz continu en vue de l'élimination de l'eau dans un calcinateur Flash, dans un préchauffeur à cyclone ou dans un procédé à lit fluidisé.

2. Procédé selon la revendication 1, **caractérisé en ce que** le produit intermédiaire est broyé pour éliminer l'eau formée pendant la recuisson.

3. Procédé selon la revendication 2, **caractérisé en ce que** la durée de broyage est comprise entre 0,1 et 30 minutes, de manière préférée entre 0,5 et 10 minutes et de manière plus particulièrement préférée entre 1 et 5 minutes.

4. Procédé selon l'une quelconque des revendications 1 à 3, **caractérisé en ce que** l'énergie de broyage est limitée de telle manière qu'aucune ou essentiellement aucune transformation chimique ou minéralogique n'a lieu.

5. Procédé selon l'une quelconque des revendications 1 à 4, **caractérisé en ce que** des germes d'inoculation contenant du silicate de calcium hydraté, du clinker Portland, du sable de laitier, des silicates de magnésium, du ciment sulfo-alumineux (bélitique), du verre soluble, et/ou de la poudre de verre sont ajoutés en vue du traitement hydrothermique, de manière préférée en une quantité comprise entre 0,01 et 30 % en poids.

6. Procédé selon l'une quelconque des revendications 1 à 5, **caractérisé en ce que**, pendant le chauffage lors de la recuisson, une température dans la plage comprise entre 400 et 440°C est maintenue entre 1 et 120 minute(s).

7. Procédé selon l'une quelconque des revendications 1 à 6, **caractérisé en ce que**, lors de la recuisson, une vitesse de chauffage comprise entre 1 et 6 000°C/min et un temps de séjour compris entre 0,01 et 600 min sont recherchés.
